# EUROPÄISCHE PATENTSCHRIFT

(11) **EP 1 762 768 B1**
(45) Veröffentlichungstag und Bekanntmachung des Hinweises auf die Patenterteilung: **21.10.2009**
(21) Anmeldenummer: 06017696.3
(22) Anmeldetag: 25.08.2006
(51) Int. Cl.: F16L 23/00, B25B 27/16

(54) **Variable Spreizvorrichtung**
Adjustable spreading device
Dispositif écarteur ajustable

(30) Priorität: 10.09.2005 DE 202005014291 U
(43) Veröffentlichungstag der Anmeldung: 14.03.2007
(73) Patentinhaber: Klann Spezial-Werkzeugbau GmbH, 78166 Donaueschingen (DE)
(72) Erfinder: Klann, Horst, 78052 Villingen-Schwenningen (DE)
(74) Vertreter: Neymeyer, Franz

(56) Entgegenhaltungen:
- DE-C- 812 898
- DE-U1- 8 904 751
- US-A- 2 350 404
- US-A- 2 420 438
- US-A- 2 465 177

## Beschreibung

Die Erfindung betrifft eine Spreizvorrichtung zum Aufweiten einer Klemmhülse, welche zur klemmenden Aufnahme eines Zylinders geschlitzt ausgebildet ist und im Bereich ihres Klemmschlitzes zwei symmetrisch zum Klemmschlitz und parallel zu einer durch den Klemmschlitz definierten Radialen verlaufende Spannzungen aufweist, welche mit koaxial zueinander und quer zur Klemmhülse verlaufenden Durchgangsbohrungen versehen sind, wobei die Spreizvorrichtung einen Grundkörper mit zwei parallel zueinander verlaufenden U-Schenkeln aufweist, welche über einen Verbindungssteg miteinander verbunden und mit verstellbaren Fixierbolzen versehen sind, über welche die Spreizvorrichtung mit den Durchgangsbohrungen der Spannzungen in Eingriff bringbar ist und, wobei der Verbindungssteg einen Lagerabschnitt aufweist, in welchem eine Stellschraube mit einem drehbar gelagerten Spreizkeil angeordnet ist, welcher durch Verstellen der Stellschraube zwischen die Spannzungen einbringbar ist und die Spannzungen während der Stellbewegung der Stellschraube auseinander drückt.

Spreizvorrichtungen gemäß dem Oberbegriff von Anspruch 1 sind beispielsweise aus der DE 89 04 751 U1 bekannt. Solche Spreizvorrichtungen dienen zum Aufweiten von Klemmhülsen, welche rohrartig ausgebildet sind und einen Klemmschlitz aufweisen. Durch diese geschlitzte Ausführung der Klemmhülse kann diese auf ein Rohr, einen Zapfen oder dergleichen aufgeschoben und durch Zusammenpressen mit diesem klemmend in Verbindung gebracht werden. Als Beispiel seien hier Klemmhülsen im Bereich der Fahrzeugtechnik genannt, welche bei Fahrwerkskonstruktionen eingesetzt werden. Dabei dienen dieKlemmhülsen beispielsweise zur Halterung des Zylinderrohres eines Feder-Dämpferbeines am Achsschenkel der Fahrzeugachse. Die Erfindung ist allerdings nicht auf solche Klemmhülsen beschränkt, sondern betrifft auch sämtliche anderen Klemmhülsen in anderer Anwendung, welche ähnlich aufgebaut sind. Solche Klemmverbindungen zwischen einer Klemmhülse und einem zylindrischen Bauteil sind beispielsweise auch bei Traggelenksverbindungen bekannt.

Solche Klemmhülsen weisen zur klemmenden Halterung beispielsweise eben eines solchen Zylinderrohres zwei symmetrisch zu deren Klemmschlitz angeordnete und parallel zu einer durch den Klemmschlitz definierten radialen verlaufende Spannzungen auf. Diese Spannzungen sind mit quer zur Längsmittelachse der Klemmhülse verlaufenden Durchgangsbohrungen versehen, durch welche eine entsprechende Klemmschraube hindurch steckbar ist. Auf diese Klemmschraube ist eine Spannmutter aufgesetzt, so dass durch Anziehen der Spannmutter der Abstand der Spannzungen verringert wird, wodurch eine Klemmwirkung der Klemmhülse erreichbar ist.

Bei den erwähnten Traggelenkzapfen eines Traggelenkes weist dessen Lagerauge ebenfalls zwei Spannzungen auf, welche im wesentlichen parallel zu einer Radialen des Lagerauges verlaufen. Dabei bildet das Lagerauge die Klemmhülse, welche ebenfalls zum Entfernen des Traggelenkzapfens geweitet werden muss.

Um nun - beispielsweise zu Reparaturzwecken - ein Feder-Dämpferbein austauschen zu können, muss die Klemmverbindung zwischen dem Zylinderrohr des Feder-Dämpferbeines und der Klemmhülse gelöst werden. In der Regel ist es dazu notwendig, die Klemmhülse zumindest in geringem Maße zu weiten um das Zylinderrohr aus der Klemmhülse herausziehen zu können. Hierzu dienen Spreizvorrichtungen der gattungsgemäßen Art.

Um nun eine solche Klemmhülse weiten zu können, wird zunächst die Spannschraube aus den Durchgangsbohrungen der Spannzungen entfernt. Damit wird die Klemmkraft, welche über die Spannzungen wirkt aufgehoben. Die bekannte Spreizvorrichtung ist nun derart ausgestaltet, dass sie mit den Durchgangsbohrungen der Spannzungen in Eingriff gebracht werden kann.

Dazu weist die bekannte Spreizvorrichtung einen U-förmigen Grundkörper auf, welcher mit zwei parallel zueinander verlaufenden und voneinander beabstandeten U-Schenkeln versehen ist. Diese U-Schenkel sind bei dieser Ausführungsform über einen Verbindungssteg einstückig miteinander verbunden. Jeder der U-Schenkel ist mit einem etwa parallel zum Verbindungssteg verlaufenden Fixierbolzen versehen, welche in ihrem einander zugewandten Endbereich jeweils einen Haltezapfen aufweisen. Diese Fixierbolzen sind in den U-Schenkeln quer zu den U-Schenkeln verlaufend in ihrer Längsrichtung verstellbar aufgenommen, so dass deren Abstand voneinander entsprechend der Dimensionierung der Spannzungen mit ihren Durchgangsbohrungen einstellbar ist. Es sind auch Konstruktionen bekannt, bei welchen die U-Schenkel gegenüber dem Grundkörper bewegbar sind, so dass auch hierdurch eine Verstellung der Fixierbolzen zueinander möglich ist. Durch die Verstellung der Fixierbolzen in ihrer Längsrichtung können diese mit den Durchgangsbohrungen der Spannzungen in Eingriff gebracht werden. Hierzu werden die Fixierbolzen zunächst in eine zurückgestellte Position gebracht und anschließend fluchtend zu den Durchgangsbohrungen der Spannzungen ausgerichtet. Nun kann der Abstand der Fixierbolzen verringert werden, sodass diese mit ihren Haltezapfen formschlüssig mit den Durchgangsbohrungen der Spannzungen in Eingriff gelangen. Somit ist der Grundkörper der Spreizvorrichtung über die Fixierbolzen an den Spannzungen der Klemmhülse festgelegt.

Weiter ist im Bereich des Verbindungssteges ein durchgehendes Stellgewinde vorgesehen, welches rechtwinklig zum Verbindungssteg und zu den beiden Fixierbolzen verläuft. In der Regel ist dabei dieses Stellgewinde symmetrisch zu den beiden U-Schenkeln im Verbindungssteg angeordnet. In dieses Stellgewinde ist eine Stellschraube eingeschraubt, in welcher ein Spreizkeil drehbar gelagert ist. Dieser Spreizkeil überragt die Stellschraube zu den beiden Spannzungen hin und wird durch Verstellen der Stellschraube zwischen die beiden Spannzungen gedrückt. Auf Grund der Keilform des Spreizkeiles werden bei weiterem Anziehen der Stellschraube die Spannzungen auseinander gedrückt, wodurch ein Aufweiten der Klemmhülse bewirkt wird.

Nachdem nun diese Klemmhülse geweitet ist, kann das Zylinderrohr des Feder-Dämpferbeines aus der Klemmhülse genommen werden, so dass beispielsweise ein Austauschen des Feder-Dämpferbeines bewerkstelligt werden kann.

Bei den bekannten Spreizvorrichtungen ist die Stellschraube mit dem Spreizkeil in einer vordefinierten Position zwischen den beiden U-Schenkeln angeordnet. Diese U-Schenkel weisen dabei einen relativ großen Abstand voneinander auf, so dass unterschiedlich dimensionierte Spannzungen zwischen den U-Schenkeln aufgenommen werden können. Durch eine entsprechende Wahl der Länge der Haltezapfen der Fixierbolzen ist der gesamte Grundkörper in Richtung der Durchgangsbohrung der Spannzungen um ein gewisses Maß verschiebbar, welches der Differenz der Außenabmessungen der Spannzungen und dem lichten Abstand der U-Schenkel entspricht. Bei der Ausführungsform nach der DE 89 04 751 U1 ist dieser Abstand fest vorgegeben, da die U-Schenkel und der Grundkörper eine einstückige Einheit bilden, wobei dieser Abstand bei verschiedenen Klemmhülsen mit unterschiedlich gestalteten Spannzungen nicht immer ausreichend ist.

Beispielsweise sind Klemmhülsen mit Spannzungen bekannt, bei welchen die beiden Spannzungen eine unterschiedliche Breite aufweisen. Dies hat zwangsläufig zur Folge, dass der sich zwischen diesen Spannzungen befindende Spalt bezogen auf die Gesamtbreite der Spannzungen nicht symmetrisch angeordnet ist. In solchen Fällen ist die bekannte Spreizvorrichtung nur bedingt einsetzbar, da der Spreizkeil nur bedingt auf den Spalt zwischen den Spannzungen einstellbar ist.

Aus der US-A-2 350 404 ist eine Spreizvorrichtung bekannt, mit welcher zwei aneinander liegende Bauteile auseinander gedrückt werden können. Hierzu wird eine Stellschraube mit einem Spreizkeil verwendet. Die Stellschraube ist bei dieser Konstruktion mit ihrem Spreizkeil auf den Spalt zwischen den aneinander liegenden Bauteilen einstellbar und zu diesem Zweck relativ zu einem Lagerabschnitt der Spreizvorrichtung, in welchem die Stellschraube aufgenommen ist verstellbar. Zur Fixierung dieser Spreizvorrichtung an mit den aneinander liegenden Bauteilen angeformten Bauelementen ist eine relativ kompliziert aufgebaute Halteeinrichtung vorgesehen, wodurch die Handhabung erschwert wird und diese Spreizvorrichtung insbesondere nicht zum Aufweiten einer Klemmhülse eingesetzt werden kann.

Demgemäß liegt der Erfindung die Aufgabe zugrunde, eine Spreizvorrichtung derart auszugestalten, dass diese variabel für unterschiedlich gestaltete mit unterschiedlich ausgebildeten Spannzungen versehene Klemmhülsen einsetzbar ist.

Die Aufgabe wird erfindungsgemäß in Verbindung mit den Markmalen des Oberbegriffes des Anspruches 1 dadurch gelöst, dass die Stellschraube im Lagerabschnitt quer zu ihrer Stellbewegung verschiebbar gelagert ist und, dass die Fixierbolzen jeweils einen zylindrischen Lagerschaft aufweisen, über welchen der jeweilige Fixierbolzen jeweils in einer Durchgangsbohrung einer der U-Schenkel des Grundkörpers in seiner Längsrichtung verschiebbar aufgenommen ist.

Durch die erfindungsgemäße Ausgestaltung wird eine Spreizvorrichtung zur Verfügung gestellt, welche auch zum Spreizen von Klemmhülsen geeignet ist, deren symmetrisch zum Klemmschlitz verlaufende Spannzungen mit unterschiedlicher Breite ausgestattet sind. Dazu ist erfindungsgemäß vorgesehen, dass die Stellschraube mit ihrem Spreizkeil in einen ebenen Lagerabschnitt quer zur Stellbewegung der Stellschraube verschiebbar gelagert ist. Durch diese Ausgestaltung kann der Spreizkeil durch Verstellung der Stellschraube entlang des Lagerabschnittes in einfachster Weise auf den Spalt oder Zwischenraum zwischen den beiden Spannzungen eingestellt werden. Zur Führung der Stellschraube entlang des Lagerabschnittes können hier verschiedene Konstruktionen, wie beispielsweise sogenannte Schlittenführung vorgesehen sein, bei welchen die Stellschraube in ein Stellgewinde eines Führungsschlittens eingeschraubt ist. Dieser Führungsschlitten kann beispielsweise über eine Schwalbenschwanzführung oder dgl. am Lagerabschnitt des Grundkörpers längsverschieblich aufgenommen sein. Des Weiteren ist erfindungsgemäß vorgesehen, dass die Fixierbolzen jeweils einen zylindrischen Lagerschaft aufweisen, über welchen der jeweilige Fixierbolzen jeweils in einer Durchgangsbohrung einer der U-Schenkel des Grundkörpers in seiner Längsrichtung verschiebbar aufgenommen ist. Durch diese Ausgestaltung sind die Fixierbolzen zum Ansetzen des Grundkörpers an den Spannzungen äußerst einfach und schnell verstellbar, wodurch die Handhabung der erfindungsgemäßen Spreizvorrichtung erheblich erleichtert wird. Durch die verschiebbare Aufnahme der Fixierbolzen in den Durchgangsbohrungen der U-Schenkel ist des Weiteren eine präzise Einstellung der Fixierbolzen auf die äußere Breite der Spannzungen nicht erforderlich. Die Fixierbolzen können mit ihren Haltezapfen, welche im Durchmesser kleiner ausgebildet sind als deren Lagerschaft, mit dem Lagerschaft beim Ansetzen an den Durchgangsbohrungen der Spannzungen bis an die Spannzungen selbst herangeschoben werden. Beim Spreizvorgang, d.h. bei der damit einhergehenden Vergrößerung des Abstandes der beiden Spannzungen werden die Fixierbolzen zwangsläufig wieder zurück geschoben.

Weiter kann gemäß Anspruch 2 vorgesehen sein, dass zur verschiebbaren Lagerung der Stellschraube ein relativ zum Lagerabschnitt bewegbares Stellelement vorgesehen ist, welches mit einem Stellgewinde zur Aufnahme der Stellschraube versehen ist. Diese Ausgestaltung ermöglicht einer äußerst einfache Herstellung einer solchen Verstellmöglichkeit der Stellschraube längs des Lagerabschnittes. Dieses Stellelement kann, wie zu Anspruch 1 angegeben, beispielsweise als Führungsschlitten ausgebildet sein.

Gemäß Anspruch 3 kann auch vorgesehen sein, dass das Stellelement als Gewindebuchse ausgebildet ist, welche in einem Langloch des Lagerabschnittes verschiebbar geführt ist. Auch diese Ausgestaltung ermöglicht eine einfache Herstellung, wobei auch die Montage im Langloch des Lagerabschnittes äußerst einfach ist. Gegenüber einem alternativ evtl. vorgesehenen Führungsschlitten hat diese Ausgestaltung den Vorteil, dass das auch bei Verwendung eines Führungsschlittens zur Durchführung der Stellschraube durch den Lagerabschnitt ohnehin vorzusehende Langloch gleichzeitig als Führung genutzt wird, so dass die Herstellung erheblich vereinfacht wird.

Um beim Anziehen der Stellschraube ein Mitdrehen der Gewindebuchse sicher zu vermeiden, ist gemäß Anspruch 4 vorgesehen, dass die Gewindebuchse zwei parallel verlaufende Führungsflächen aufweist, über welche die Gewindebuchse unverdrehbar im Langloch des Lagerabschnittes aufgenommen ist.

Zur einfachen und sicheren, unverlierbaren Aufnahme der Gewindebuchse im Langloch des Lagerabschnittes weist diese gemäß Anspruch 5 in einem ihrer Endbereiche einen Sicherungsring auf. Hierdurch wird einerseits eine äußerst einfache Montage gewährleistet, wobei auch die Gewindebuchse in äußerst einfacher Weise austauschbar ist. Ein solches Austauschen kann eventuell notwendig sein, wenn bei längerer Betriebszeit das Stellgewinde der Gewindebuchse oder auch die Stellschraube beschädigt sind. Dies hat hier weiter den Vorteil, dass durch diese Ausgestaltung auch nicht der gesamte Grundkörper der Spreizvorrichtung erneuert werden muss.

Zur Aufnahme der beim Aufspreizen durch die Stellschraube entstehenden Axialkräfte, weist die Gewindebuchse gemäß Anspruch 6 in ihrem dem Sicherungsring gegenüber liegenden Endbereich einen erweiterten Anschlagsteg auf, über welchen sich die Gewindebuchse flächig im Randbereich des Langloches während des Auseinanderdrückens der Spannzungen axial abstützt. Durch diese flächige Abstützung der Gewindebuchse über den Anschlagsteg erfolgt eine flächige Verteilung der Axialkräfte, so dass weder die Gewindebuchse noch der Lagerabschnitt des Verbindungssteges des Grundkörpers auch bei größeren Axialkräften deformiert werden können.

Gemäß Anspruch 7 kann weiter vorgesehen sein, dass in jedem U-Schenkel zur Begrenzung des Stellweges des jeweiligen Fixierbolzens eine Führungsschraube mit einem Führungszapfen vorgesehen ist, mit welchem die jeweilige Führungsschraube in eine im Bereich des Lagerschaftes angeordnete Längsnut des jeweils zugeordneten Fixierbolzens eingreift. Durch diese Ausgestaltung wird sicher verhindert, dass die Fixierbolzen aus den Durchgangsbohrungen der U-Schenkel herausrutschen können. Dabei können die Führungsschrauben auch zur einfachen und sicheren Fixierung der jeweils eingestellten Position der Fixierbolzen im an den Spannzungen angesetzten Zustand dienen, indem die Führungszapfen in ihrer Länge entsprechend dimensioniert werden und leicht klemmend gegen den Nutgrund der jeweiligen Längsnut verspannbar sind. Ein solche leichte Klemmung ist allerdings nicht zwingend erforderlich.

Auch bei einer leichten Klemmung der Fixierbolzen durch die Führungszapfen der Führungsschrauben können die Fixierbolzen beim Aufspreizen der Spannzungen und somit bei einer Vergrößerung der Gesamtbreite der Spannzungen in einfacher Weise gegen der geringen Klemmkraft leicht wieder zurück gedrückt werden. Auch hierdurch wird die Handhabung der erfindungsgemäßen Spreizvorrichtung erheblich vereinfacht, da keine präzise Einstellung der Fixierbolzen auf die maximal mögliche Breite der auseinander gedrückten Spannzungen notwendig ist.

Gemäß Anspruch 8 kann vorgesehen sein, dass der Spreizkeil stumpf ausgebildet ist und an seinem den Spannzungen gegenüber liegenden Ende durch radial erweiterte Anschlagschultern begrenzt ist. Durch diese Ausgestaltung des Spreizkeiles wird die Stellbewegung, welche durch die Stellschraube bewirkt wird begrenzt, so dass ein unzulässiges Aufweiten bzw. Auseinanderdrücken der Spannzungen sicher vermieden wird. Weiter kann der Spreizkeil nur mit einer begrenzten Tiefe zwischen die beiden Spannzungen eingebracht werden. Durch diese Ausgestaltung ist eine Klemmhülse über ihre Spannzungen sicher zu weiten, ohne dass eine unzulässige Deformierung der Klemmhülse auftreten kann. Weiter sind auch Konstruktionen bekannt, insbesondere bei Kraftfahrzeugachsen, bei welchen in den Zwischenraum zwischen die beiden Spannzungen ein Verdrehsicherungsblech radial von innen nach außen hineinragt. Durch die Ausgestaltung gemäß Anspruch 8 wird somit auch eine Kollision mit einem solchen Verdrehsicherungsblech sicher vermieden, da die Eindringtiefe des Spreizkeils zwischen die beiden Spannzungen begrenzt ist. Diese Ausgestaltung gemäß Anspruch 8 ist allerdings nicht für jede Art des Einsatzes zwingend erforderlich.

Der Spreizkeil kann weiter im Bereich seiner Anschlagschulter mit einer vordefinierten Breite ausgestattet sein, welche genügend groß ist, um eine ausreichende Aufweitung der Klemmhülse durch Auseinanderdrücken der Spannzungen zu bewirken. Diese vordefinierte Breite ist dabei derart bemessen, dass keine unzulässigen Verformungen sowohl der Klemmhülse als auch der Spannzungen auftreten können. Solche unzulässigen Verformungen sind insbesondere von Bedeutung, wenn die Klemmhülse mit ihren Spannzungen als Gussbauteil ausgebildet ist. Wird dort eine zu große Verformung durch den Spreizkeil bewirkt, besteht die Gefahr, dass die Spannzungen brechen.

Gemäß Anspruch 9 kann vorgesehen sein, dass der Spreizkeil im Bereich seines freies Endes zwei seitliche Fasen aufweist. Durch die Fasen ist der Spreizkeil wesentlich einfacher zwischen den beiden Spannzungen der Klemmhülse ansetzbar.

Gemäß Anspruch 10 kann vorgesehen sein, dass der Spreizkeil einen Zylinderabschnitt aufweist, über welchen der Spreizkeil in einer zylindrischen Vertiefung der Stellschraube drehbar und austauschbar gelagert ist. Durch diese Ausgestaltung, insbesondere durch die austauschbare Lagerung des Spreizkeils in der Stellschraube, ist die erfindungsgemäße Spreizvorrichtung in einfachster Weise an unterschiedlich dimensionierte Spannzungen einer Klemmhülse anpassbar. Insbesondere können Spreizkeile unterschiedlicher Dicke und unterschiedlicher Länge vorgesehen werden, so dass die jeweilige Klemmhülse ohne Beschädigung genügend geweitet werden kann.

Weiter kann gemäß Anspruch 11 der Spreizkeil mit einem die Stellschraube nach außen durchragenden Drehstift versehen sein. Mittels dieses Drehstiftes ist der Spreizkeil manuell auf den Verlauf des Klemmschlitzes der Klemmhülse bzw. auf den Zwischenraum der beiden Spannzungen ausrichtbar. Durch diese Ausgestaltung wird die Handhabung der erfindungsgemäßen Spreizvorrichtung erheblich vereinfacht. Durch den Drehstift kann der Spreizkeil nicht nur auf die Ausrichtung des Klemmschlitzes und damit auf den Zwischenraum zwischen den beiden Spannzungen ausgerichtet werden. Diese ausgerichtete Position ist über den Drehstift auch beim anschließenden Anziehen der Stellschraube manuell fixierbar, so dass der Spreizkeil sicher zwischen den beiden Spannzungen ansetzbar ist.

Gemäß Anspruch 12 wird der Spreizkeil in der zylindrischen Vertiefung der Stellschraube durch den Drehstift gehalten, wobei der Drehstift mit dem Spreizkeil durch eine Gewindeverbindung verbunden ist. Durch diese Ausgestaltung wird die Montage und das Austauschen des Spreizkeiles zusammen mit dem Drehstift erheblich vereinfacht.

Anhand der Zeichnung wird nachfolgend die Erfindung anhand eines Ausführungsbeispieles näher erläutert. Es zeigt:
- Fig. 1: eine Explosiondarstellung eines Ausführungsbeispiels einer erfindungsgemäßen Spreizvorrichtung mit einem Grundkörper, einem Spreizkeil mit Stellschraube sowie einem im Grundkörper verstellbar aufgenommenen Stellelement;
- Fig. 2: die Bauteile aus Fig. 1 der erfindungsgemäßen Spreizvorrichtung im montierten Zustand, zusammen mit zwei separat dargestellten Fixierbolzen und Führungsschrauben in perspektivischer Exploisiondarstellung;
- Fig. 3: die vollständig montierte, an Spannzungen einer Spannhülse angesetzte Spreizvorrichtung im Vertikalschnitt.

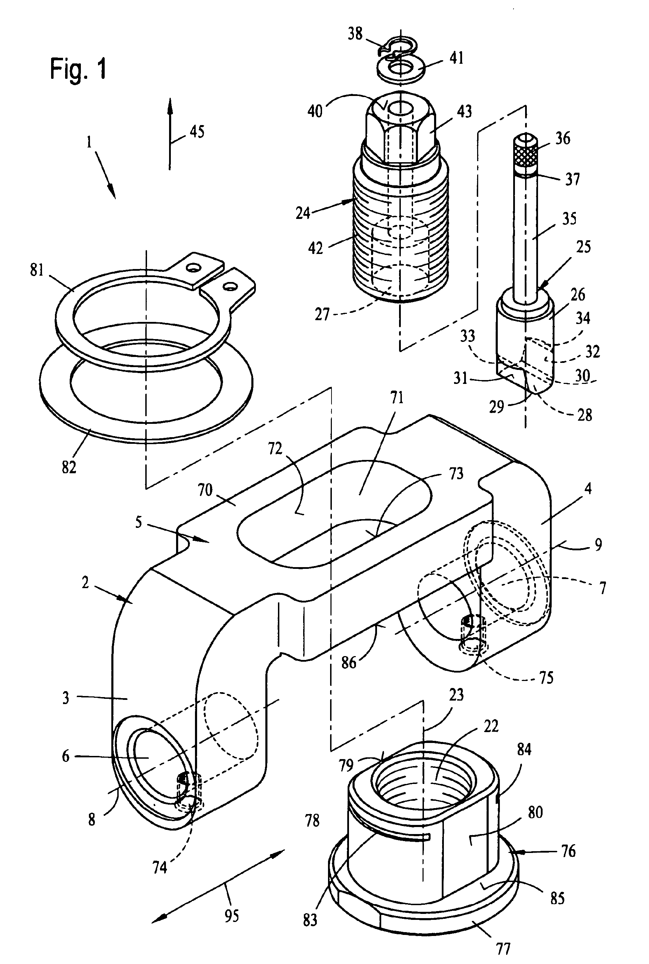

Fig. 1 zeigt ein Ausführungsbeispiel einer erfindungsgemäßen Spreizvorrichtung 1 in perspektivischer Explosionsdarstellung.

Beim vorliegenden Ausführungsbeispiel besteht diese Spreizvorrichtung 1 aus einem Grundkörper 2, welcher zwei parallel zueinander verlaufende U-Schenkel 3 und 4 aufweist, die beim vorliegenden Ausführungsbeispiel über einen Verbindungssteg 5 feststehend miteinander verbunden sind. Der Verbindungssteg 5 weist einen ebenen Lagerabschnitt 70 auf, der mit einem zentralen Langloch 71 versehen ist. Dieses zentrale Langloch 71 ist symmetrisch zu den beiden U-Schenkeln 3 und 4 im Lagerabschnitt 70 angeordnet und bildet zwei seitliche Führungswände 72 und 73. Weiter ist aus Fig. 1 ersichtlich, dass die beiden U-Schenkel 3 und 4 rechtwinklig zum Verbindungssteg 5, insbesondere zum Lagerabschnitt 70 verlaufen und jeweils mit Durchgangsbohrungen 6 bzw. 7 versehen sind. Diese Durchgangsbohrung 6 und 7 sind mit ihren Längsmittelachsen 8 und 9 koaxial zueinander verlaufend in den U-Schenkeln 3 und 4 angeordnet.

Jeder der Durchgangsbohrungen 6 und 7 ist jeweils ein Innengewinde 74 bzw. 75 zugeordnet, welches beim vorliegenden Ausführungsbeispiel radial zur jeweiligen Durchgangsbohrung 6 bzw. 7 verläuft und in die jeweils zugeordnete Durchgangsbohrung 6 bzw. 7 mündet. Diese Innengewinde 74 und 75 sind in Längsrichtung des jeweiligen U-Schenkels 3 bzw. 4 ausgerichtet und dementsprechend symmetrisch zum jeweiligen U-Schenkel 3 bzw. 4 angeordnet. Diese Ausrichtung bzw. Orientierung der Innengewinde 74 und 75 ist nur beispielhaft angegeben. Die Innengewinde 74 und 75 können auch quer zum jeweiligen U-Schenkeln 3 und 4 um jeweils 90° gedreht zu der in der Zeichnung dargestellten Orientierung radial zur jeweiligen Durchgangsbohrung 6 bzw. 7 angeordnet sein.

Die Spreizvorrichtung 1 weist weiter ein Stellelement in Form einer Gewindebuchse 76 auf, welche in ihrem unteren Endbereich einen erweiterten Anschlagsteg 77 aufweist. Oberhalb dieses erweiterten Anschlagsteges 77 bildet die Gewindebuchse 76 einen ovalen Führungsschaft 78, welcher zwei seitliche, parallel zueinander verlaufende Führungsflächen 79 und 80 aufweist, über welche der Führungsschaft 78 unverdrehbar und verschiebbar im Langloch 71 des Lagerabschnittes 70 aufnehmbar ist..

Des Weiteren weist die Gewindebuchse 76 ein zentrales Stellgewinde 22 auf, deren Funktion später noch näher erläutert wird. Diese Gewindebuchse 76 ist mit ihrem Führungsschaft 78 passend und in Richtung des Doppelpfeiles 95 verschiebbar in das Langloch 71 des Lagerabschnittes 70 von unten einsetzbar. Zur Sicherung dieses eingesetzten Zustandes ist beim vorliegenden Ausführungsbeispiel ein Sicherungsring 81 zusammen mit einer U-Scheibe 82 vorgesehen. Zur Aufnahme des Sicherungsringes 81 an der Gewindebuchse 76 weist diese in ihrem dem Anschlagsteg 77 gegenüberliegenden Endbereich zwei Nutabschnitte 83 und 84 auf, in welche der Sicherungsring 81 formschlüssig einsetzbar ist.

Das heißt, dass im montierten Zustand der Lagerabschnitt 70 zwischen der U-Scheibe 82 mit dem Sicherungsring 81 und dem Anschlagsteg 77 der Gewindebuchse 76 aufgenommen wird. Dabei ist der Anschlagsteg 77 in seiner Erweiterung derart ausgestaltet, dass er großflächig unterseitig im Randbereich des Langloches 71 am Lagerabschnitt 70 anliegt. Die dabei gebildete Auflagefläche 85 des Anschlagsteges 77 ist dabei derart gestaltet, dass größere Axialkräfte in Richtung des Pfeiles 45 abstützbar sind, ohne dass die Auflagefläche 85 oder auch die Unterseite 86 im Umgebungsbereich des Langloches 71 des Lagerabschnittes 70 deformiert werden können. Im in das Langloch 71 eingesetzten Zustand ist dabei die Gewindebuches 76 mit der Längsmittelachse 23 ihres Stellgewindes 22 rechtwinklig zum Lagerabschnitte 70 und den beiden Längsmittelachsen 8 und 9 der beiden Durchgangsbohrungen 6 und 7 ausgerichtet.

In das Stellgewinde 22 der Gewindebuchse 76 ist eine Stellschraube 24 einschraubbar, in welche wiederum ein Spreizkeil 25 einsetzbar ist. Dieser Spreizkeil 25 weist dazu einen Zylinderabschnitt 26 auf, über welchen der Spreizkeil 25 in eine zylindrische Vertiefung 27 der Stellschraube 24 drehbar einsetzbar ist.

Beim vorliegenden Ausführungsbeispiel ist der Spreizkeil 25 abgestumpft ausgebildet und weist eine ebene Stirnfläche 28 auf. Diese Stirnfläche 28 ist seitlich mit zwei Fasen 29 und 30 versehen, an welche sich Keilflächen 31 und 32 anschließen. Ausgehend von den beiden Fasen 29 und 30 verlaufen die beiden Keilflächen 31 und 32 beim vorliegenden Ausführungsbeispiel von unten nach oben divergierend unter einem Winkel von etwa 17° geneigt zueinander. Dieser Keilwinkel kann aber auch Werte von 15° bis 20° annehmen.

Die beiden Keilflächen 31 und 32 sind nach oben hin durch eine jeweils radial erweiterte Anschlagschulter 33 bzw. 34 axial begrenzt und weisen in diesem Bereich eine begrenzte, vordefinierte Breite auf. Diese Breite im Bereich der Anschlagschultern 33 und 34 ist maximal um 4 mm größer als die Breite der vorderen Stirnfläche 28 des Spreizkeils 25, so dass die maximal mögliche Aufweitung einer Klemmhülse definiert bestimmt ist. Hierbei ist zu beachten, dass eine Klemmhülse am Ende des Aufweitens nicht plastisch verformt wird und damit beispielsweise ein erneutes Einsetzen und Festklemmen eines Zylinderrohres erheblich erschwert oder gar unmöglich wird. Das begrenzte Aufweiten ist insbesondere auch bei Klemmhülsen welche als Gussbauteil ausgebildet sind von Bedeutung, da bei solchen Bauteilen bei zu großer Aufweitung die Gefahr eines Bruches besteht.

Der Spreizkeil 25 weist in axialer Verlängerung seines Zylinderabschnittes 26 nach oben hin einen Drehstift 35 auf, welcher rückseitig in den Zylinderabschnitt 26 des Spreizkeiles 25 eingeschraubt sein kann. Dieser Drehstift 35 ist in seinem oberen Endbereich mit einem Rändelprofil 36 versehen, über welches der gesamte Spreizkeil 25 manuell drehbar ist. Dabei überragt der Drehstift 35 mit diesem Rändelprofil 36 im montierten Zustand die obere Stirnfläche 40 der Stellschraube 24, so dass das Rändelprofil von außen frei zugänglich ist.

Zur Sicherung der montierten Position des Spreizkeiles 25 in der Stellschraube 24 weist der Drehstift 35 unterhalb seines Rändelprofils 36 eine umlaufende Sicherungsnut 37 auf, in welche im montierten Zustand ein Sicherungsring 38 einsetzbar ist. Dabei ist in diesem montierten Zustand zwischen diesem Sicherungsring 38 und der oberen Stirnfläche 40 der Stellschraube 24 eine U-Scheibe 41 vorgesehen. Erfindungsgemäß können unterschiedlich dimensionierte Spreizkeile 25 vorgesehen sein, so dass die Spreizvorrichtung 1 insbesondere an unterschiedlich beabstandete und dimensionierte Spannzungen einer Klemmhülse anpassbar ist. Dabei ist das auswechseln der Spreizkeile durch deren Festlegung über den Drehstift 35 und den Sicherungsring 38 äußerst einfach durchführbar.

Mittels dieses Drehstiftes 35 ist der Spreizkeil 25 in seiner Orientierung auf den parallel zur Klemmhülse verlaufenden Klemmschlitz bzw. auf den Zwischenraum der Spannzungen einstellbar. Während des Festziehens der Stellschraube 24 kann der Spreizkeil 25 weiter in seiner ausgerichteten Orientierung über den Drehstift 35 manuell arretiert werden, so dass der Spreizkeil 25 sicher zwischen die Spannzungen der Klemmhülse bringbar ist.

Weiter weist die Stellschraube 24 in axialer Verlängerung nach oben zu ihrem Stellgewinde 42 einen Antriebssechskant 43 auf, über welchen die Stellschraube 24 mittels eines entsprechenden Schlüsselwerkzeuges drehend betätigbar ist.

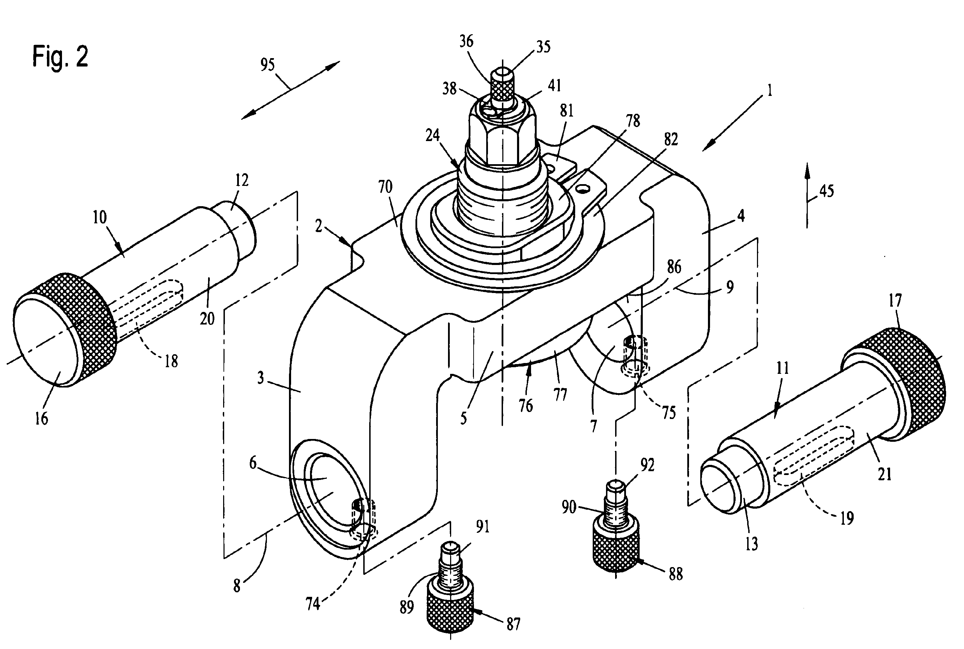

Fig. 2 zeigt eine perspektivische Darstellung der Spreizvorrichtung 1 aus Fig. 1 in teilweisem montierten Zustand. Es ist erkennbar, dass die Gewindebuchse 76 in den Lagerabschnitt 70 des Verbindungssteges 5 eingesetzt ist. Dabei ragt die Gewindebuchse 76 in ihrem Führungsschaft 78 nach oben aus dem Lagerabschnitt 70 heraus und liegt mit ihrem Anschlagsteg 77 an der Unterseite 86 des Lagerabschnittes 70 flächig an. Mittels des Sicherungsringes 81 ist die Gewindebuchse 76 in dieser montierten Position am Lagerabschnitt 70 axial gesichert, wobei zwischen dem Sicherungsring 81 und dem Lagerabschnitt 70 die U-Scheibe 82 angeordnet ist. Es ist erkennbar, dass auch die U-Scheibe 82 radial erweitert ausgebildet ist, so dass sich auch hierdurch eine recht große Anlagefläche auf dem Lagerabschnitt 70 ergibt.

Weiter ist aus Fig. 2 erkennbar, dass der Drehstift 35 mit seinem Rändelprofil 36 die Stellschraube 24 nach oben hin überragt. Dabei ist der Drehstift 35 über den Sicherungsring 38 sowie die U-Scheibe 41 und somit auch der in Fig. 2 nicht sichtbare Spreizkeil 25 in der Stellschraube 24 gesichert. Dabei ist in Fig. 2 die Stellschraube 24 in einer in Richtung des Pfeiles 45 zurückgezogenen Position dargestellt.

Weiter sind in Fig. 2 zwei Fixierbolzen 10 und 11 dargestellt, welche jeweils mit einem Haltezapfen 12 bzw. 13 versehen sind, welche gegenüber dem Lagerschaft 20 bzw. 21 des jeweiligen Fixierbolzens 10 bzw. 11 radial verjüngt ausgebildet sind. Im Bereich der beiden Lagerschäfte 20 und 21 ist jeweils eine Längsnut 18 bzw. 19 vorgesehen. Des Weiteren weisen die Fixierbolzen 10 und 11 in ihrem jeweiligen dem Haltezapfen 12 bzw. 13 gegenüber liegenden Endbereich einen radial erweiterten Rändelkopf 16 bzw. 17 auf, über welchen die Fixierbolzen 10 bzw. 11 manuell handhabbar sind.

Die Fixierbolzen 10 und 11 sind mit ihren Lagerschäften 20 und 21 von außen in die Durchgangsbohrungen 6 bzw. 7 der beiden U-Schenkeln 3 und 4 einschiebbar. Dabei werden die Fixierbolzen 10 und 11 über ihre Lagerschäfte 20 und 21 in Richtung der jeweiligen Längsmittelachse 8 bzw. 9 der Durchgangsbohrungen 6 und 7 verstellbar geführt. Im montierten Zustand werden die Fixierbolzen 10 und 11 mit ihren Längsnuten 18 und 19 auf die beiden Innengewinde 74 und 75 der jeweiligen Durchgangsbohrung 6 bzw. 7 ausgerichtet, so dass die Fixierbolzen 10 und 11 mittels zweier Führungsschrauben 87 und 88 unverlierbar gesichert sind.

Dazu weisen die beiden Führungsschrauben 87 und 88 jeweils einen Gewindezapfen 89 und 90 auf, mittels welchen die Führungsschrauben 87 und 88 jeweils in eines der Innengewinde 74 bzw. 75 des jeweiligen U-Schenkels 3 bzw. 4 einschraubbar sind. Um die beiden Führungsschrauben 87 und 88 mit den beiden Längsnuten 18 und 19 der Fixierbolzen 10 und 11 in Eingriff bringen zu können, sind die beiden Führungsschrauben 87 und 88 jeweils mit einem Führungszapfen 91 bzw. 92 versehen. Die Länge dieser Führungszapfen 91 und 92 kann dabei so gewählt, dass die Fixierbolzen 10 und 11 bei gelöster Führungsschraube 87 und 88 axial in Richtung der beiden Längsmittelachsen 8 und 9 begrenzt verschiebbar sind. Der mögliche Stellweg wird dabei durch die Länge der Längsschlitze 18 bzw. 19 bestimmt.

Nachdem die beiden Fixierbolzen 10 und 11 mit ihren beiden Haltezapfen 12 und 13 mit den Durchgangsbohrungen der Spannzungen einer Klemmhülse in Eingriff gebracht wurden, kann deren Position durch leichtes Anziehen der Führungsschrauben 87 und 88 leicht klemmend fixiert werden. Dabei sind die Klemmkräfte derart einstellbar, dass die Fixierbolzen 10 und 11 gegen eine gewisse Stellkraft in den Durchgangsbohrungen 6 und 7 der beiden U-Schenkel 3 und 4 weiterhin verschiebbar sind. Eine solche klemmende Fixierung der Fixierbolzen 10 und 11 ist allerdings nicht zwingend erforderlich.

Weiter ist erkennbar, dass durch verschieben der Gewindebuchse 76 in Richtung des Doppelpfeiles 95 deren Position relativ zu den beiden U-Schenkeln 3 und 4 veränderbar ist. Durch diese Verschiebemöglichkeit bzw. Verstellmöglichkeit in Richtung des Doppelpfeiles 95 ist mit der Verstellung der Gewindebuchse 76 auch eine Verstellung der Stellschraube 24 zusammen mit dem darin aufgenommenen Spreizkeil 25 verbunden, so dass dieser auf die Lage des zwischen zwei Spannzungen bestehenden Zwischenraumes einstellbar ist.

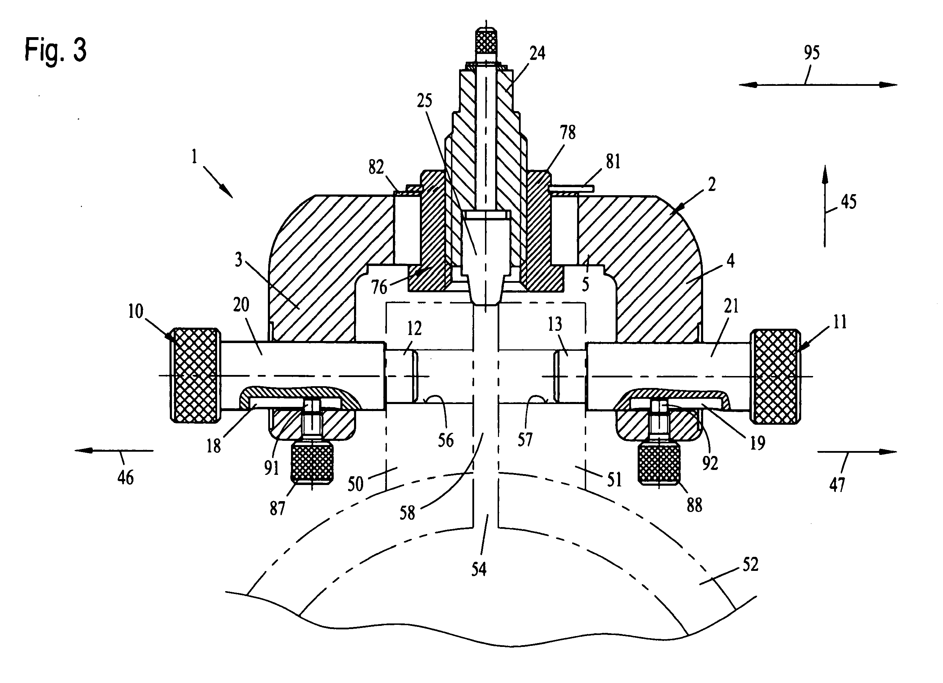

Fig. 3 zeigt eine solche angesetzte Position der Spreizvorrichtung 1 an zwei Spannzungen 50 und 51 einer Klemmhülse 52. Es ist erkennbar, dass die beiden Fixierbolzen 10 und 11 mit ihrem jeweiligen Haltezapfen 12 bzw. 13 jeweils formschlüssig mit einer Durchgangsbohrung 56 bzw. 57 der Spannzungen 50 und 51 in Eingriff stehen. Die beiden Führungsschrauben 87 und 88 sind leicht angezogen, so dass durch deren Führungszapfen 91 bzw. 92, welche in die Längsnuten 18 und 19 der Lagerabschnitte 20 und 21 der Fixierbozen 10 und 11 eingreifen, die Fixierbolzen 10 und 11 in der in Fig. 3 dargestellten Eingriffsposition leicht klemmend fixiert sind.

Dabei ist erkennbar, dass die beiden U-Schenkel 3 und 4 rechtwinklig zu den Fixierbolzen 10 und 11 sowie rechtwinklig zum Verbindungssteg 5 des Grundkörpers 2 verlaufen. Aus Fig. 3 ist ebenfalls ersichtlich, dass die Gewindebuchse 76 in das Langloch 71 von unten eingesetzt ist und den Lagerabschnitt 70 mit ihrem Führungsschaft 78 nach oben überragt. Auch ist der Sicherungsring 81 und die U-Scheibe 82 aus Fig. 3 erkennbar, über welche die Gewindebuchse 76 axial in dem Langloch 71 gesichert ist.

In Fig. 3 ist die Stellschraube 24 in ihrer zurückgezogenen Position dargestellt, in welcher der Spreizkeil 25 im Bereich des Zwischenraumes 58 zwischen den beiden Spannzungen 50 und 52 angesetzt ist. Dieser Zwischenraum 58 ist dabei in radialer Verlängerung eines Klemmschlitzes 54 der Klemmhülse 52 angeordnet.

Es ist leicht vorstellbar, dass durch Anziehen der Stellschraube 24 sich diese zusammen mit dem Spreizkeil 25 entgegen der Richtung des Pfeiles 45 bewegt und somit der Spreizkeil in den Zwischenraum 58 zwischen die beiden Spannzungen 50 und 51 eingedrückt wird. Durch diese Stellbewegung bzw. durch dieses Eindringen des Spreizkeiles 25 in den Zwischenraum 58 wird der Abstand zwischen den beiden Spannzungen 50 und 51 sukzessive vergrößert, bis diese an den Lagerschäften 20 und 21 der Fixierbolzen 10 und 11 anstehen. Bei weiteren zustellen der Stellschraube 24 werden nun die beiden Fixierbolzen 10 und 11 nach außen gedrückt. Durch diese Ausgestaltung der Lagerung der Fixierbolzen 10 und 11 und deren evtl. leicht klemmenden Fixierung über die Führungsschrauben 87 und 88 ist eine präzise Einstellung der Fixierbolzen bezüglich deren Abstand zueinander und der maximalen Aufweitung der beiden Spannzungen 50 und 51 nicht zwingend notwendig. Wie oben erwähnt, ist eine Klemmung durch die Führungsschrauben 87, 88 nicht zwingend erforderlich, so dass die Fixierbolzen 10 und 11 auch frei zurückgeschoben werden können.

Durch die Verstellbarkeit der Stellschraube 24 zusammen mit der Gewindebuchse 76 in Richtung des Doppelpfeiles 95 ist der Spreizkeil 25 auf die Position des Zwischenraumes 58 zwischen den beiden Spannzungen 50 und 51 in einfacher Weise einstellbar. Dadurch wird ein variabler Einsatz der erfindungsgemäßen Spreizvorrichtung 1 für Klemmhülsen mit Spannzungen unterschiedlicher Dimensionierung, insbesondere mit unterschiedlicher Positionierung des Klemmschlitzes 54 zusammen mit dem Zwischenraum 58 ermöglicht.

## Patentansprüche

1. Spreizvorrichtung (1) zum Aufweiten einer Klemmhülse (52), welche zur klemmenden Aufnahme eines Zylinders geschlitzt ausgebildet ist und im Bereich ihres Klemmschlitzes (54) zwei symmetrisch zum Klemmschlitz (54) und parallel zu einer durch den Klemmschlitz (54) definierten Radialen verlaufende Spannzungen (50, 51) aufweist, welche mit koaxial zueinander und quer zur Klemmhülse (52) verlaufenden Durchgangsbohrungen (56, 57) versehen sind,
wobei die Spreizvorrichtung (1) einen Grundkörper (2) mit zwei parallel zueinander verlaufenden U-Schenkeln (3, 4) aufweist, welche über einen Verbindungssteg (5) miteinander verbunden und mit verstellbaren Fixierbolzen (10, 11) versehen sind, über welche die Spreizvorrichtung (1) mit den Durchgangsbohrungen (56, 57) der Spannzungen (50, 51) in Eingriff bringbar ist und, wobei der Verbindungssteg (5) einen Lagerabschnitt (70) aufweist, in welchem eine Stellschraube (24) mit einem drehbar gelagerten Spreizkeil (25) angeordnet ist, welcher durch Verstellen der Stellschraube (24) zwischen die Spannzungen (50, 51) einbringbar ist und die Spannzungen (50, 51) während der Stellbewegung der Stellschraube (24) auseinander drückt,
**dadurch gekennzeichnet,**
**dass** die Stellschraube (24) im Lagerabschnitt (70) quer zu ihrer Stellbewegung (Pfeil 45) verschiebbar gelagert ist und, dass die Fixierbolzen (10, 11) jeweils einen zylindrischen Lagerschaft (20, 21) aufweisen, über welchen der jeweilige Fixierbolzen (10 bzw. 11) jeweils in einer Durchgangsbohrung (6 bzw. 7) einer der U-Schenkel (3 bzw. 4) des Grundkörpers (2) in seiner Längsrichtung verschiebbar aufgenommen ist.

2. Spreizvorrichtung nach Anspruch 1, **dadurch gekennzeichnet, dass** zur verschiebbaren Lagerung der Stellschraube (24) ein relativ zum Lagerabschnitt (70) bewegbares Stellelement (76) vorgesehen ist, welches mit einem Stellgewinde (22) zur Aufnahme der Stellschraube (24) versehen ist.

3. Spreizvorrichtung nach Anspruch 2, **dadurch gekennzeichnet, dass** das Stellelement als Gewindebuchse (76) ausgebildet ist, welche in einem Langloch (71) des Lagerabschnittes (70) verschiebbar geführt ist.

4. Spreizvorrichtung nach Anspruch 3, **dadurch gekennzeichnet, dass** die Gewindebuchse (76) zwei parallel verlaufende Führungsflächen (79, 80) aufweist, über welche die Gewindebuchse (76) unverdrehbar im Langloch (71) des Lagerabschnittes (70) aufgenommen ist.

5. Spreizvorrichtung nach Anspruch 3 oder 4, **dadurch gekennzeichnet, dass** die Gewindebuchse (76) in einem ihrer Endbereiche mit einem Sicherungsring (81) versehen ist, über welchen die Gewindebuchse (76) unverlierbar im Langloch (71) des Lagerabschnittes (70) gehalten ist.

6. Spreizvorrichtung nach Anspruch 5, **dadurch gekennzeichnet, dass** der die Gewindebuchse (76) in ihrem dem Sicherungsring (81) gegenüber liegenden Endbereich einen erweiterten Anschlagsteg (77) aufweist, über welchen sich die Gewindebuchse (76) flächig im Randbereich des Langloches (71) während des Auseinanderdrückens der Spannzungen (50, 51) axial abstützt.

7. Spreizvorrichtung nach einem der Ansprüche 1 bis 6, **dadurch gekennzeichnet, dass** in jedem U-Schenkel (3, 4) zur Begrenzung des Stellweges des jeweiligen Fixierbolzens (10, 11) eine Führungsschraube (87, 88) mit einem Führungszapfen (91, 92) vorgesehen ist, mit welchem die jeweilige Führungsschraube (87, 88) in eine im Bereich des Lagerschaftes (20, 21) angeordnete Längsnut (18, 19) des jeweils zugeordneten Fixierbolzens (10 bzw. 11) eingreift.

8. Spreizvorrichtung nach einem der Ansprüche 1 bis 7, **dadurch gekennzeichnet, dass** der Spreizkeil (25) stumpf ausgebildet ist und an seinem den Spannzungen (50, 51) gegenüber liegenden Endbereich durch radial erweiterte Anschlagschultern (33, 34) begrenzt ist und,
dass der Spreizkeil (25) im Bereich seiner Anschlagschultern (33, 34) eine vordefinierte Breite aufweist.

9. Spreizvorrichtung nach Anspruch 8, **dadurch gekennzeichnet, dass** der Spreizkeil (25) im Bereich seines freien Endes zwei seitliche Fasen (29, 30) aufweist.

10. Spreizvorrichtung nach Anspruch 8 oder 9, **dadurch gekennzeichnet, dass** der Spreizkeil (25) einen Zylinderabschnitt (26) aufweist, über welchen der Spreizkeil (25) in einer zylindrischen Vertiefung (27) der Stellschraube (24) drehbar und austauschbar gelagert ist.

11. Spreizvorrichtung nach Anspruch 8, 9 oder 10, **dadurch gekennzeichnet, dass** der Spreizkeil (25) mit einem die Stellschraube (24) nach außen durchragenden Drehstift (35) versehen ist, mittels welchem der Spreizkeil (25) manuell auf den Verlauf des Klemmschlitzes (54) der Klemmhülse (52) ausrichtbar ist.

12. Spreizvorrichtung nach Anspruch 11, **dadurch gekennzeichnet, dass** der Spreizkeil (25) in der zylindrischen Vertiefung (27) der Stellschraube (24) durch den Drehstift (35) gehalten ist und dass der Drehstift (35) mit dem Spreizkeil (25) durch eine Gewindeverbindung verbunden ist.

## Claims

1. A spreading device (1) for widening a collet (52), which is designed to be slotted for clamping around a cylinder and in the region of its clamping slot (54) comprises two clamping tongues (50, 51) that are symmetric to the clamping slot (54) and parallel to a radial line defined by the clamping slot (54), which clamping tongues are provided with through bores (56, 57) running coaxially in relation to one another and perpendicular to the collet (52),
whereby the spreading device (1) comprises a basic body (2) with two parallel U-shanks (3, 4) which are connected together by a connecting web (5) and are provided with adjustable securing bolts (10, 11), by means of which the spreading device (1) can be brought into engagement with the through bores (56, 57) of the clamping tongues (50, 51), and whereby the connecting web (5) comprises a bearing section (70) in which an adjusting screw (24) is arranged with a rotatably mounted spreading wedge (25), which by adjusting the adjusting screw (24) can be inserted between the clamping tongues (50, 51) and pushes the clamping tongues (50, 51) apart during the adjustment movement of the adjusting screw (24),
**characterised in that**
the adjusting screw (24) in the bearing section (70) is mounted displaceably perpendicular to its adjusting movement (arrow 45), and **in that** the securing bolts (10, 11) have a cylindrical bearing shaft (20, 21) respectively, by means of which the respective securing bolt (10 or 11) is mounted displaceably respectively in a through bore (6 or 7) of one of the U-shanks (3 or 4) of the basic body (2) in it longitudinal direction.

2. The spreading device according to claim 1, **characterised in that** for the displaceable bearing of the adjusting screw (24) an adjusting element (76) movable relative to the bearing section (70) is provided, which adjusting element is provided with an adjusting thread (22) for receiving the adjusting screw (24).

3. The spreading device according to claim 2, **characterised in that** the adjusting element is designed in the form of a threaded bush (76), which is guided displaceably in a longitudinal hole (71) of the bearing section (70).

4. The spreading device according to claim 3, **characterised in that** the threaded bush (76) comprises two parallel guiding faces (79, 80), by means of which the threaded bush (76) is mounted non-rotatably in the longitudinal hole (71) of the bearing section (70).

5. The spreading device according to claim 3 or 4, **characterised in that** the threaded bush (76) is provided in one of its end sections with a securing ring (81), by means of which the threaded bush (76) is held securely in the longitudinal hole (71) of the bearing section (70).

6. The spreading device according to claim 5, **characterised in that** the threaded bush (76) in its end section lying opposite the securing ring (81) has a widened stop web (77), by means of which the threaded bush (76) is supported axially and flat in the edge area of the longitudinal hole (71) during the pressing apart of the clamping tongues (50, 51).

7. The spreading device according to one of claims 1 to 6, **characterised in that** in each U-shank (3, 4) for delimiting the adjustment path of the respective securing bolt (10, 11) a guiding screw (87, 88) is provided with a guiding pin (91, 92), with which the respective guiding screw (87, 88) engages in a longitudinal groove (18, 19) of the respective allocated securing bolt (10 or 11) arranged in the region of the bearing shaft (20, 21).

8. The spreading device according to one of claims 1 to 7, **characterised in that** the spreading wedge (25) is designed to be blunt and is delimited at its end section opposite the clamping tongues (50, 51) by radially widened stop shoulders (33, 34), and **in that** the spreading wedge (25) has a predefined width in the region of its stop shoulders (33, 34).

9. The spreading device according to claim 8, **characterised in that** the spreading wedge (25) has two lateral bevels (29, 30) in the region of its free end.

10. The spreading device according to claim 8 or 9, **characterised in that** the spreading wedge (25) comprises a cylinder section (26) by means of which the spreading wedge (25) is mounted rotatably and replaceably in a cylindrical depression (27) of the adjusting screw (24).

11. The spreading device according to claim 8, 9 or 10, **characterised in that** the spreading wedge (25) is provided with a rotary pin (35) penetrating the adjusting screw (24) towards the outside, by means of which rotary pin the spreading wedge (25) can be aligned manually to the shape of the clamping slot (54) of the collet (52).

12. The spreading device according to claim 11, **characterised in that** the spreading wedge (25) is held in the cylindrical depression (27) of the adjusting screw (24) by the rotary pin (35), and **in that** the rotary pin (35) is connected to the spreading wedge (25) by means of the thread connection.

## Revendications

1. Dispositif écarteur (1) pour élargir une douille de serrage (52) qui est conçue fendue pour recevoir avec serrage un cylindre et qui présente, dans la région de sa fente de serrage (54), deux languettes de serrage (50, 51) s'étendant symétriquement par rapport à la fente de serrage (54) et parallèlement à une radiale définie par la fente de serrage (54), languettes qui sont pourvues de trous débouchants (56, 57) mutuellement coaxiaux et s'étendant transversalement par rapport à la douille de serrage (52),
sachant que le dispositif écarteur (1) présente un corps de base (2) avec deux branches de U (3, 4) s'étendant parallèlement entre elles, qui sont reliées entre elles par l'intermédiaire d'un dos de U (5) et qui sont pourvues de boulons d'immobilisation réglables (10, 11) au moyen desquels le dispositif écarteur (1) peut être amené en prise avec les trous débouchants (56, 57) des languettes de serrage (50, 51), sachant que le dos du U (5) présente une partie formant palier (70) dans laquelle est disposée une vis de réglage (24) avec une clavette d'écartement (25) montée à rotation, qui peut être introduite entre les languettes de serrage (50, 51) en réglant la vis de réglage (24) et qui écarte l'une de l'autre les languettes de serrage (50, 51) pendant le mouvement de réglage de la vis de réglage (24), **caractérisé en ce que** la vis de réglage (24) est montée dans la partie formant palier (70) à translation transversalement à son mouvement de réglage (flèche 45), et **en ce que** les boulons d'immobilisation (10, 11) présentent chacun un corps de palier cylindrique (20, 21), au moyen duquel le boulon d'immobilisation respectif (10 ou 11) est reçu à translation dans sa direction longitudinale dans un trou débouchant respectif (6 ou 7) d'une des branches de U (3 ou 4) du corps de base (2).

2. Dispositif écarteur selon la revendication 1, **caractérisé en ce que**, pour le montage à translation de la vis de réglage (24), il est prévu un élément de réglage (76) mobile par rapport à la partie formant palier (70), qui est pourvu d'un filetage de réglage (22) pour recevoir la vis de réglage (24).

3. Dispositif écarteur selon la revendication 2, **caractérisé en ce que** l'élément de réglage est réalisé sous forme de douille filetée (76), qui est guidée à translation dans un trou oblong (71) de la partie formant palier (70).

4. Dispositif écarteur selon la revendication 3, **caractérisé en ce que** la douille filetée (76) présente deux surfaces de guidages (79, 80) s'étendant en parallèle, au moyen desquelles la douille filetée (76) est reçue sans possibilité de rotation dans le trou oblong (71) de la partie formant palier (70).

5. Dispositif écarteur selon la revendication 3 ou 4, **caractérisé en ce que** la douille filetée (76) est pourvue, dans une de ses régions terminales, d'un circlip (81) au moyen duquel la douille filetée (76) est maintenue de manière imperdable dans le trou oblong (71) de la partie formant palier (70).

6. Dispositif écarteur selon la revendication 5, **caractérisé en ce que** la douille filetée (76) présente, dans sa région terminale opposée au circlip (81), un méplat de butée élargi (77) au moyen duquel la douille filetée (76) s'appuie axialement à plat dans la région de bord du trou oblong (71) pendant l'écartement des languettes de serrage (50, 51).

7. Dispositif écarteur selon l'une des revendications 1 à 6, **caractérisé en ce que**, afin de limiter la course de réglage du boulon d'immobilisation respectif (10, 11), il est prévu dans chaque branche du U (3, 4) une vis de guidage (87, 88) pourvue d'un tenon de guidage (91, 92) par lequel la vis de réglage respective (87, 88) s'engage dans une rainure longitudinale (18, 19), disposée dans la région du corps de palier (20, 21), du boulon d'immobilisation respectivement associé (10 ou 11).

8. Dispositif écarteur selon l'une des revendications 1 à 7, **caractérisé en ce que** la clavette d'écartement (25) est réalisée tronquée et est délimitée, dans sa région terminale opposée aux languettes de serrage (50, 51), par des épaulements de butée radialement élargis (33, 34), et **en ce que** la clavette d'écartement (25) présente une largeur prédéfinie dans la région de ses épaulements de butée (33, 34).

9. Dispositif écarteur selon la revendication 8, **caractérisé en ce que** la clavette d'écartement (25) présente deux chanfreins latéraux (29, 30) dans la région de son extrémité libre.

10. Dispositif écarteur selon la revendication 8 ou 9, **caractérisé en ce que** la clavette d'écartement (25) présente une partie cylindrique (26), au moyen de laquelle la clavette d'écartement (25) est montée à rotation et avec possibilité de remplacement dans un renfoncement cylindrique (27) de la vis de réglage (24).

11. Dispositif écarteur selon la revendication 8, 9 ou 10, **caractérisé en ce que** la clavette d'écartement (25) est pourvue d'une broche rotative (35) traversant la vis de réglage (24) vers l'extérieur, broche au moyen de laquelle la clavette d'écartement (25) peut être alignée manuellement sur l'allure de la fente de serrage (54) de la douille de serrage (52).

12. Dispositif écarteur selon la revendication 11, **caractérisé en ce que** la clavette d'écartement (25) est maintenue par la broche rotative (35) dans le renfoncement cylindrique (27) de la vis de réglage (24), et **en ce que** la broche rotative (35) est reliée à la clavette d'écartement (25) par une liaison filetée.
